# EUROPÄISCHE PATENTANMELDUNG

(11) **EP 1 279 464 A1**
(43) Veröffentlichungstag der Anmeldung: **29.01.2003**
(21) Anmeldenummer: 02015745.9
(22) Anmeldetag: 13.07.2002
(51) Int. Cl.: B23Q 11/00, B08B 15/04

(54) **Werkzeug mit einer Absaughaube**

(30) Priorität: 24.07.2001 DE 10136996
(71) Anmelder: MAPAL Fabrik für Präzisionswerkzeuge Dr. Kress KG, D-73431 Aalen (DE)
(72) Erfinder:
(74) Vertreter: Gleiss, Alf-Olav, Dipl.-Ing.

(57) **Zusammenfassung**

Es wird ein Werkzeug (1) zur spanenden Bearbeitung von Werkstücken mit einer Absaughaube (11) zum Abtransport der entstehenden Späne vorgeschlagen. Es zeichnet sich dadurch aus, dass die Absaughaube (11) eine Turbine (17) umfasst.

## Beschreibung

Die Erfindung betrifft ein Werkzeug zur spanenden Bearbeitung von Werkstücken mit einer Absaughaube zum Abtransport der entstehenden Späne.

Werkzeuge der hier genannten Art sind bekannt. Sie dienen dazu, von einem Werkstück Späne abzutragen. Dazu wird in der Regel das Werkzeug in Rotation versetzt und mit einem stillstehenden Werkstück in Eingriff gebracht. Denkbar ist es aber auch, dass Werkstück in Rotation zu versetzen und mit einem stillstehenden Werkzeug in Eingriff zu bringen. Bei der sogenannten Nassbearbeitung werden Kühl- und Schmiermittel eingesetzt und auf die Bearbeitungsstelle geleitet, um einerseits das Werkzeug zu kühlen und um andererseits die Bearbeitungsstelle zu schmieren. Überdies werden mit dem Kühl- und Schmiermittel die bei der Zerspanung entstehenden Späne aus dem Bearbeitungsbereich abgeführt. Bei der Trocken- und Minimalmengenschmierung ist es häufig problematisch, die entstehenden Späne vom Zerspanungsort abzutransportieren. Es werden nämlich bei dieser Bearbeitungsart keine flüssigen Kühl- bzw. Schmiermittel eingesetzt. Vielmehr wird die Zerspanungsstelle mittels zugeführter Luft gekühlt. Die entstehenden Späne werden durch den Luftstrom abtransportiert. Dabei ist es möglich, der Luft geringe Mengen eines Schmiermittels zuzusetzen. Es wurden bereits Absaughauben eingesetzt, die mit einer Absaugeinheit mit die mit einer Absaugeinheit mit Absaugmotor verbunden sind. Diese dient dazu, die Absaughaube mit einem Unterdruck zu beaufschlagen, der dem Abtransport der bei der Zerspanung entstehenden Späne dient. Es hat sich herausgestellt, dass Werkzeuge dieses Aufbaues sehr groß sind und damit nicht allgemein eingesetzt werden können. Überdies ist ein automatischer Werkzeugwechsel nur erschwert möglich. Außerdem sind Werkzeuge dieses Aufbaus teuer.

Aufgabe der Erfindung ist es, ein Werkzeug der eingangs genannten Art zu schaffen, das diesen Nachteil nicht aufweist.

Zur Lösung dieser Aufgabe wird ein Werkzeug vorgeschlagen, das die in Anspruch 1 genannten Merkmale umfasst. Es zeichnet sich dadurch aus, dass in der dem Abtransport der bei der Zerspanung anfallenden Späne dienenden Absaughaube eine Turbine untergebracht ist, mit deren Hilfe ein Unterdruck erzeugt werden kann. Dieser dient dem Abtransport der entstandenen Späne. Die Absaughaube ist sehr kompakt aufgebaut und kann daher in sehr vielen Fällen eingesetzt werden. Überdies ist es möglich, Werkzeuge mit einer derartigen Absaughaube automatisch auszuwechseln, weil eine Verbindung zu externen Absaugeinrichtungen entfallen kann.

Bevorzugt wird ein Werkzeug, das sich dadurch auszeichnet, dass die Turbine von dem Werkzeug selbst angetrieben wird. Der Raumbedarf kann auf diese Weise minimiert werden, weil ein separater Antrieb der Turbine innerhalb der Absaughaube entfallen kann.

Weitere Ausgestaltungen ergeben sich aus den übrigen Unteransprüchen.

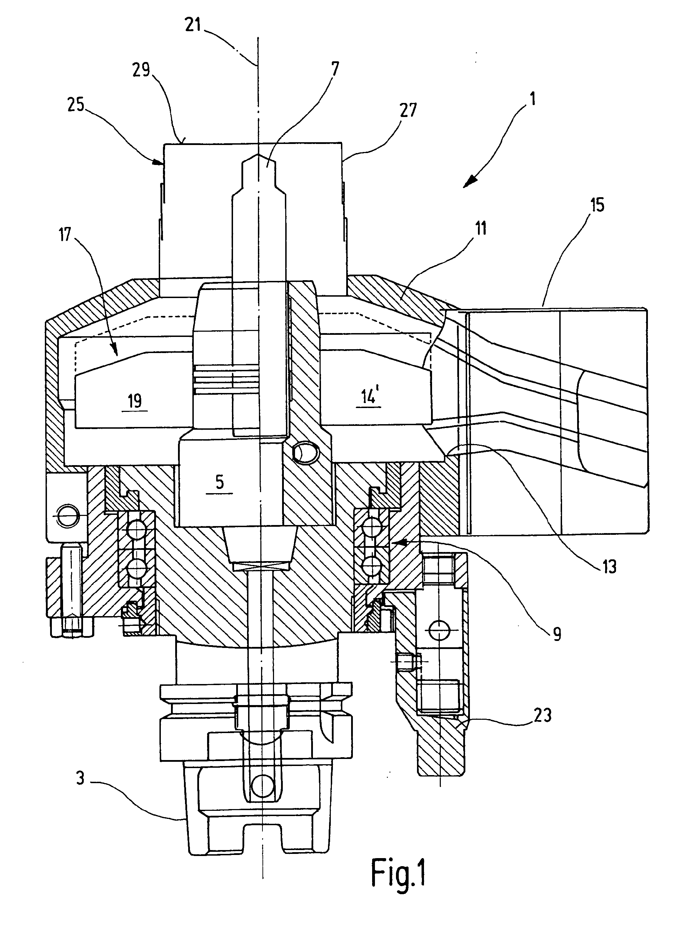

Die Erfindung wird im folgenden anhand der Zeichnung näher erläutert, die eine einzige Figur umfasst. Diese zeigt ein Werkzeug im TeilLängsschnitt.

Das in der Figur dargestellte Werkzeug 1 umfasst einen Schaft 3, über den das Werkzeug 1 mit einer Werkzeugmaschine koppelbar ist. Mit dem Schaft 3 ist drehfest eine Werkzeughalterung 5 gekoppelt, die der Aufnahme eines hier lediglich angedeuteten Werkzeugs 7 dient. Über eine geeignete Lagereinheit 9 ist eine Absaughaube 11 mit dem Werkzeug 1 verbunden, die dazu dient, von dem Werkzeug abgetragene Späne aufzunehmen, die über eine Abgabeöffnung 13 im Gehäuse der Absaughaube 11 ausgeworfen werden. Die Späne können unmittelbar in einen Späneförderer ausgeworfen oder über einen Ansatz 15 abgeführt werden.

Im Inneren der Absaughaube 11 befindet sich eine Turbine 17 die mindestens einen, vorzugsweise eine Anzahl in gleichem Abstand zueinander angeordnete Turbinenschaufeln aufweist, die im folgenden kurz als Schaufeln 19, 19' bezeichnet werden. Die äußere Kontur der Schaufeln 19, 19' ist an die Innenform bzw. Innenkontur der Absaughaube 11 angepasst, um eine maximale Luftansaugung zu gewährleisten.

Die Schaufeln 19, 19' sind hier unmittelbar an der Werkzeughalterung 5 angebracht, sodass sie von der Werkzeugmaschine über den Schaft 3 in Rotation versetzbar sind. Es bedarf also keines zusätzlichen Antriebs für die Turbine 17, um im Inneren der Absaughaube 11 einen Unterdruck zur Absaugung der von dem Werkzeugeinsatz 7 abgetragenen Späne zu erzeugen.

Das Werkzeug 1 baut sehr klein, weil die Turbine 17 Teil des Werkzeuges 1 ist, insbesondere Teil der Werkzeughalterung 5.

Die Form der Schaufeln 19, 19' kann variiert werden. Es ist also nicht zwingend erforderlich, dass diese in die Drehachse 21 des Werkzeugs 1 enthaltenden Ebenen liegen und damit radial zu dieser verlaufen. Sie können auch unter einem Winkel zu einer gedachten Durchmesserlinie angeordnet oder gekrümmt ausgebildet sein und/oder insbesondere auf ihrer - in Drehrichtung gesehen - Vorderseite eine spezielle Ausgestaltung aufweisen, um die bei der Zerspanung entstehenden Späne optimal zu erfassen und aus der Abgabeöffnung 13 auszuwerfen.

Die Turbine 17 weist hier einzelne mit der Werkzeughalterung 5 verbundene Schaufeln 19, 19' auf. Es ist auch möglich, an der Werkzeughalterung 5 einen Turbinenring anzubringen, von dem die Schaufeln entspringen.

Um während des Betriebs des Werkzeugs 1 eine Rotation der Absaughaube 11 zu vermeiden, ist eine Drehmomentstütze 23 vorgesehen, über die die Absaughaube 11 an der Werkzeugmaschine, die hier nicht dargestellt ist, abgestützt und drehfest gelagert wird.

Die Absaughaube 11 weist vorzugsweise einen längenvariablen Saugabschnitt 25 auf, der den Werkzeugeinsatz 7 umgibt. Längenvariable Saugabschnitte sind bekannt. Bevorzugt wird hier eine Realisierung der Gestalt, dass eine Federbandspirale 27 eingesetzt wird, deren Windungen in Längsrichtung gesehen, also in Richtung der Drehachse 21, ineinander schiebbar sind. Grundsätzlich sind auch andere Ausgestaltungen verwendbar, beispielsweise als zusammenschiebbarer Balg ausgebildete Saugabschnitte. Damit ist es möglich, dass eine Stirnseite 29 des Saugabschnitts 25 auf dem zu bearbeitenden Werkstück aufliegt oder in unmittelbarer Nähe dazu angeordnet ist. Gegebenenfalls können an der Stirnseite 29 Schutzeinrichtungen, beispielsweise aus Kunststoff oder dergleichen, vorgesehen werden, um eine Beeinträchtigung der Werkstückoberfläche und einen Verschleiß der Stirnseite 29 zu vermeiden.

Die Absaughaube 11 ist so um das Werkzeug 7 angeordnet, dass bei der Bearbeitung eines Werkstücks das Werkzeug 7 in Richtung seiner Drehachse 21 verlagert werden kann. Das Werkzeug 7 kann also als Bohrer, Feinbohrer, Reibahle, Senk- oder Aufbohrwerkzeug ausgebildet sein. Da die Absaughaube 11 längenvariabel ist, kann diese im Ausgangszustand, also während das Werkzeug 7 nicht eingesetzt wird, in axialer Richtung über das Werkzeug hinausragen, so dass das Werkzeug nicht über die Stirnseite 29 der Absaughaube 11 hinausragt und diese quasi als Schutz wirkt. Insbesondere wird aber sichergestellt, dass die Absaughaube 11 bei der Bearbeitung eines Werkstücks auf der Werkstückoberfläche aufliegt, bevor die ersten Späne von dem Werkzeug 7 abgetragen werden. Damit ist gewährleistet, dass auch bei Bearbeitungsbeginn keine Späne aus dem Bearbeitungsbereich herausgelangen können. Während das Werkzeug 7 in Richtung der Drehachse 21 in das Werkstück eingefahren wird, verkürzt sich die Absaughaube 11, weil deren Wand beispielsweise als Federbandspirale 27 ausgebildet ist, deren Windungen in Längsrichtung gesehen zusammenschiebbar sind.

Vorzugsweise ist die Absaughaube 11, wie in der Figur dargestellt, konzentrisch zum Werkzeug 7 angeordnet. Der Innendurchmesser der Absaughaube 11 kann deutlich größer sein als der Außendurchmesser des Werkzeugs 7, weil die Stirnseite 7 des Saugabschnitts 25 auf dem zu bearbeitenden Werkstück aufliegt und quasi einen geschlossenen Absaugraum bildet, aus dem abgetragene Späne nicht austreten können. Der Innendurchmesser des Saugabschnitts 25 ist vorzugsweise 1,5 bis 5,0 mal größer als der Außendurchmesser des Werkzeugs 7. Insbesondere ist der Innendurchmesser cirka 4,0 bis 4,8 mal größer. Besonders bevorzugt wird ein etwa 4,5 mal größerer Innendurchmesser des Saugabschnitts 25.

Da der Saugabschnitt 25 in einem auch großen Abstand zum Werkzeug 7 angeordnet sein kann, ist es möglich, verschiedene Werkzeuge mit einer gegebenen Absaughaube 11 zu kombinieren. Die Absaughaube 11 ist daher universell einsetzbar.

Da der Saugabschnitt 25 längenvariabel ist, kann dieser ebenfalls auf unterschiedlichste Werkzeuge 7 abgestimmt werden. Insbesondere ist es möglich, die Absaughaube 11 quasi als Schutzhaube zu verwenden, weil die Stirnseite 29 des Saugabschnitts 25 das Vorderende des Werkzeugs 7 vorzugsweise überragt.

Besonders vorteilhaft ist nach allem, dass der Saugabschnitt 25 der Absaughaube 11 so ausgebildet werden kann, dass dieser bereits vor Abtragung der ersten Späne auf der Werkstückoberfläche anliegt und elastisch in Richtung der Werkzeugachse beziehungsweise Drehachse 21, also entgegen der Vorschubrichtung des Werkzeugs 7 zusammengeschoben werden kann. Durch den großen Abstand zwischen Saugabschnitt 25 und Werkzeug 7 können auch lange spiralig ausgebildete Späne sicher aus dem Bearbeitungsbereich abgeführt werden, was ebenfalls dazu beiträgt, dass die Absaughaube 11 universell für verschiedenste Bearbeitungszwecke verwendbar ist.

Mit Hilfe der Turbine 17 wird im Inneren der Absaughaube 11 ein Unterdruck erzeugt, der über die Ausgestaltung der Schaufeln 19, 19' beeinflussbar ist, also durch die äußere an dem Innenraum der Absaughaube 11 angepasste Kontur der Schaufeln 19, 19', die beispielsweise bis auf ein Maß, das in der Figur durch eine gestrichelte Linie angedeutet ist, vergrößerbar ist aber auch durch deren Ausgestaltung, also dadurch, dass diese eben oder gewölbt ausgebildet sind.

Der Unterdruck in der Absaughaube 11 wird vorzugsweise über den längenvariablen Saugabschnitt 25 unmittelbar an den Ort der Zerspanung geleitet, so dass alle entstehenden Späne erfasst werden. Die Stirnseite 29 des Saugabschnitts 25 kann flächig auf dem Werkstück aufliegen. Es ist aber auch möglich, hier Ausnehmungen vorzusehen, um zusätzliche Luft anzusaugen, die dann dem Abtransport der entstehenden Späne dient. Denkbar ist es aber auch, in die Außenwand des Saugabschnittes 25 Ausnehmungen einzubringen, also beispielsweise Löcher in der Federbahnspirale 27 vorzusehen, um den gewünschten Ansaugeffekt zu ermöglichen.

Insbesondere dann, wenn die Absaughaube 11 auf Ihrer Außenseite keinerlei Anbauten aufweist, wenn also auf den Ansatz 15 verzichtet wird, kann das Werkzeug 1 auf einfache Weise ausgetauscht werden und in automatischen Fertigungszentren eingesetzt werden.

Da die Saugleistung der Turbine 17 von der Umdrehungszahl des Werkzeugs 1 abhängt, kann durch die Formgebung der Schaufeln 19, 19' auf die Förderleistung der Turbine 17 Einfluss genommen werden, um die gewünschte Absaugleistung sicherzustellen.

Insgesamt zeigt sich, dass das Werkzeug 1 einfach aufgebaut ist und ohne weiteres mit bestehenden Werkzeugmaschinen kombiniert werden kann. Es ist im Übrigen auf einfache Weise möglich, insbesondere bei Verwendung eines Turbinenrings, verschiedene Turbinenarten 17 in der Absaughaube 11 unterzubringen und die gewünschte Absaugleistung zu realisieren.

An den Ansatz 15, aus dem die von der Turbine 17 angesaugten Späne ausgeworfen werden, kann auch ohne weiteres eine Abfuhrleitung angebracht werden, um die Späne abzuführen.

Das hier beschriebene Werkzeug 1 kann insbesondere bei der Trocken- und/oder Minimalmengenschmierung eingesetzt werden. Grundsätzlich ist aber auch ein Einsatz bei der Nassbearbeitung denkbar.

Bei der Herstellung der Turbine 17 kann jedes geeignete Material verwendet werden, beispielsweise Aluminium oder aber auch ein geeignetes Kunststoffmaterial.

Das Werkzeug 1 zeichnet sich durch einen sehr einfachen, kompakten Aufbau aus. Es ist daher sehr störungsunanfällig. Im übrigen ist es sehr leicht, weil die Turbine 17 unmittelbar von dem Werkzeug, beispielsweise von der Werkzeughalterung 5 des Werkzeugs 1 angetrieben wird und damit ein zusätzlicher im Inneren der Absaughaube 11 vorgesehener Antrieb oder aber auch ein externer Antrieb entbehrlich ist.

Da die Turbine 17 mit verschiedensten Werkzeughalterungen 5 kombinierbar ist, können sowohl Reibahlen und Bohrer als auch Fräser in die Werkzeughalterung 5 eingesetzt werden. Das Werkzeug 1 ist also sehr variabel.

## Patentansprüche

1. Werkzeug zur spanenden Bearbeitung von Werkstücken mit einer Absaughaube zum Absaugen der entstehenden Späne, **dadurch gekennzeichnet, dass** die Absaughaube (11) eine Turbine (17) umfasst.

2. Werkzeug nach Anspruch 1, **dadurch gekennzeichnet, dass** die Turbine (17) von dem Werkzeug (1) angetrieben wird.

3. Werkzeug nach Anspruch 1 oder 2, **dadurch gekennzeichnet, dass** die Turbine (17) Teil des Werkzeugs (1), insbesondere Teil einer Werkzeughalterung (5) des Werkzeugs (1) ist.

4. Werkzeug nach einem der vorhergehenden Ansprüche, **dadurch gekennzeichnet, dass** die Turbine (17) mindestens eine Schaufel (19,19') aufweist.

5. Werkzeug nach einem der vorhergehenden Ansprüche, **dadurch gekennzeichnet, dass** die Form der mindestens einen Schaufel (19,19') an die Innenkontur des Gehäuses der Absaughaube (11) anpassbar ist.

6. Werkzeug nach einem der vorhergehenden Ansprüche, **dadurch gekennzeichnet, dass** die Winkelstellung der wenigstens einen Schaufel (19,19') und/oder deren Ausgestaltung an verschiedene Absaugkonstellationen anpassbar sind/ist.

7. Werkzeug nach einem der vorhergehenden Ansprüche, **dadurch gekennzeichnet, dass** die Absaughaube (11) an dem Werkzeug (1) angebracht ist.

8. Werkzeug nach einem der vorhergehenden Ansprüche, **dadurch gekennzeichnet, dass** die Absaughaube (11) eine Drehmomentstütze (23) aufweist.

9. Werkzeug nach einem der vorhergehenden Ansprüche, **dadurch gekennzeichnet, dass** die Absaughaube (11) einen längenvariablen Saugabschnitt (25) umfasst.

10. Werkzeug nach einem der vorhergehenden Ansprüche, **dadurch gekennzeichnet, dass** der Saugabschnitt (25) in Richtung der Drehachse (21) längenvariabel ist.

11. Werkzeug nach einem der vorhergehenden Ansprüche, **dadurch gekennzeichnet, dass** der Saugabschnitt (25) eine das Werkzeug (7) überragende Stirnseite (29) aufweist.

12. Werkzeug nach einem der vorhergehenden Ansprüche, **dadurch gekennzeichnet, dass** der Saugabschnitt (25) einen Innendurchmesser aufweist, der wesentlich -vorzugsweise cirka 1,5 bis 5,0 mal, insbesondere cirka 4,0 bis 3,8 mal- größer ist als der Außendurchmesser des Werkzeugs (7).
